# FASCICULE DE BREVET EUROPEEN

(11) **EP 1 550 575 B1**
(45) Date de publication et mention de la délivrance du brevet: **31.05.2006**
(21) Numéro de dépôt: 04293059.4
(22) Date de dépôt: 20.12.2004
(51) Int. Cl.: B60M 3/04, B60M 3/00

(54) **Système et station d'alimentation d'une caténaire, et procédé d'interruption de cette alimentation**
System und Station zur Versorgung eines Fahrdrahtes, sowie Verfahren zur Unterbrechung dieser Versorgung
System and station for the supply to a catenary, and process of interruption of this supply

(30) Priorité: 31.12.2003 FR 0315630
(43) Date de publication de la demande: 06.07.2005
(73) Titulaire: Alstom, 92300 Levallois-Perret (FR)
(72) Inventeur: Ehrsam, Jean, 92140 Clamart (FR)
(74) Mandataire: Domenego, Bertrand

(56) Documents cités:
- DE-A- 4 140 198
- DE-C- 4 318 934
- PATENT ABSTRACTS OF JAPAN vol. 0120, no. 67 (M-673), 2 mars 1988 (1988-03-02) & JP 62 214031 A (MEIDENSHA ELECTRIC MFG CO LTD), 19 septembre 1987 (1987-09-19)
- PATENT ABSTRACTS OF JAPAN vol. 1997, no. 04, 30 avril 1997 (1997-04-30) & JP 08 322137 A (MITSUBISHI ELECTRIC CORP), 3 décembre 1996 (1996-12-03)

## Description

L'invention concerne un système et une station d'alimentation d'une caténaire, et un procédé d'interruption de cette alimentation.

Plus précisément, l'invention concerne un système d'alimentation comportant plusieurs stations d'alimentation de la caténaire, chaque station d'alimentation étant raccordée entre deux portions amont et aval de la caténaire, et chaque station d'alimentation étant apte à interrompre l'alimentation d'au moins l'une des portions amont ou aval de caténaire à laquelle elle est raccordée en réponse à des signaux de commande.

L'état de la technique le plus proche est représenté par PATENT ABSTRACTS OF JAPAN, vol.0120, no. 67 (M-673) & JP-A-62 214 031 A.

Les stations d'alimentation sont également connues sous les termes de "sous station de traction" dans le domaine ferroviaire.

Pour interrompre l'alimentation d'au moins une portion défaillante de la caténaire, les stations d'alimentation sont typiquement équipées de disjoncteurs permettant d'isoler électriquement la portion défaillante suite, par exemple, à une rupture de la caténaire.

De manière à commander l'ouverture de ces disjoncteurs, une ligne de commande relie entre elles les différentes stations d'alimentation et permet de transmettre à chacune de ces stations d'alimentation un ordre d'ouverture de leurs disjoncteurs respectifs.

Les stations d'alimentation sont disposées le long de la caténaire et généralement espacées les unes des autres par au moins un kilomètre. La ligne de commande pour les relier est enterrée entre deux stations successives. Ceci se traduit par des frais élevés d'installation de cette ligne de commande, ce qui augmente le coût de l'installation du système d'alimentation de la caténaire.

L'invention vise à remédier à cet inconvénient en proposant un système d'alimentation d'une caténaire plus simple et moins coûteux à installer.

L'invention a donc pour objet un système d'alimentation d'une caténaire, caractérisé en ce que le système comporte au moins un générateur apte à émettre les signaux de commande par l'intermédiaire de la caténaire, et en ce que chaque station comporte un récepteur apte à recevoir les signaux de commande émis par l'intermédiaire de la caténaire et à commander l'interruption de l'alimentation d'au moins une des portions de caténaire en réponse à au moins l'un de ces signaux de commande.

Dans le système ci-dessus, les signaux de commande d'interruption de l'alimentation d'au moins une portion de la caténaire sont transportés par l'intermédiaire de la caténaire elle-même. Dès lors, plus aucune ligne de commande indépendante de la caténaire n'est nécessaire ce qui décroît le coût global de l'installation du système d'alimentation.

Suivant d'autres caractéristiques du système conforme à l'invention, celui-ci se caractérise en ce que :
- il comporte au moins un émetteur commandé par un poste de commande indépendant des stations d'alimentation, raccordé à la caténaire, et le ou chaque émetteur étant apte à émettre en permanence ou à intervalles réguliers un premier signal de commande par l'intermédiaire de la caténaire, et en ce que chaque récepteur est apte à commander le maintien de l'alimentation des portions amont ou aval de caténaire tant que le premier signal de commande est reçu en permanence ou à intervalles réguliers, et à commander l'interruption de l'alimentation des portions amont et aval de caténaire dès que le premier signal de commande n'est plus reçu ;
- ledit au moins un émetteur est raccordé à chaque extrémité de la caténaire de manière à émettre le premier signal de commande à partir de chacune de ces extrémités ;
- ledit au moins un émetteur est apte à émettre en permanence un courant alternatif à une fréquence donnée en tant que premier signal de commande ;
- chaque station d'alimentation comporte un générateur pour émettre un second signal de commande vers au moins une autre station d'alimentation par l'intermédiaire de la caténaire ;
- le générateur de chaque station est apte à émettre en permanence ou à intervalles réguliers le second signal de commande et chaque station d'alimentation est apte à recevoir le second signal de commande émis par les stations amont et aval d'alimentation raccordée aux extrémités des portions respectivement amont et aval de caténaire entre lesquelles elle est raccordée, et chaque station est apte à interrompre l'alimentation de la portion amont de caténaire si la réception du second signal de commande émis par la station amont est interrompue, et à interrompre l'alimentation de la portion aval de caténaire si la réception du second signal de commande émis par la station aval est interrompue ;
- le générateur de chaque station d'alimentation est apte à émettre en tant que second signal de commande d'un courant alternatif à une fréquence différente de celle utilisée par les générateurs des autres stations d'alimentation raccordées à la même caténaire ; et
- le générateur de chaque station est apte à émettre un second signal de commande comportant au moins un identifiant de la position de cette station par rapport aux stations amont et aval, et en ce que le récepteur de chaque station est apte à discriminer le second signal de commande émis par la station amont de celui émis par la station aval à l'aide dudit au moins un identifiant contenu dans ce second signal de commande reçu.

L'invention a également pour objet une station d'alimentation d'une caténaire adaptée pour être mise en oeuvre dans un système d'alimentation conforme à l'invention, caractérisée en ce qu'elle comporte un récepteur apte à recevoir les signaux de commande émis par l'intermédiaire de la caténaire et à commander l'interruption de l'alimentation d'au moins une des portions de caténaire en réponse à au moins l'un de ces signaux de commande.

L'invention a également pour objet un procédé d'interruption de l'alimentation d'une portion de caténaire défaillante, caractérisé en ce que le procédé consiste en outre à émettre en permanence ou à intervalles réguliers par l'intermédiaire de la caténaire, un signal de commande vers des stations d'alimentation de la caténaire, à recevoir le signal de commande dans chaque station d'alimentation, et à commander l'interruption de l'alimentation d'au moins une portion de la caténaire lorsque le signal de commande n'est plus reçu en permanence ou à intervalles réguliers dans l'une des stations d'alimentation.

Suivant d'autres caractéristiques du procédé conforme à l'invention, celui-ci se caractérise en ce que :
- chaque station d'alimentation émet en permanence ou à intervalles réguliers sur la caténaire son propre signal de commande, et
- chaque station d'alimentation reçoit le signal de commande émis par les stations d'alimentation raccordées en amont et en aval sur la caténaire, et interrompt automatiquement l'alimentation de la portion de caténaire située entre elle et la station d'alimentation en amont lorsque la réception du signal de commande émis par la station d'alimentation en amont est interrompue, et interrompt automatiquement l'alimentation de la portion de caténaire située entre elle et la station d'alimentation en aval lorsque la réception du signal de commande émis par cette station d'alimentation en aval est interrompue.

L'invention sera mieux comprise à la lecture de la description qui va suivre, donnée uniquement à titre d'exemple et faite en se référant aux dessins sur lesquels :
- la figure 1 est une illustration schématique d'un système d'alimentation conforme à l'invention, et
- la figure 2 est un organigramme d'un procédé d'alimentation conforme à l'invention.

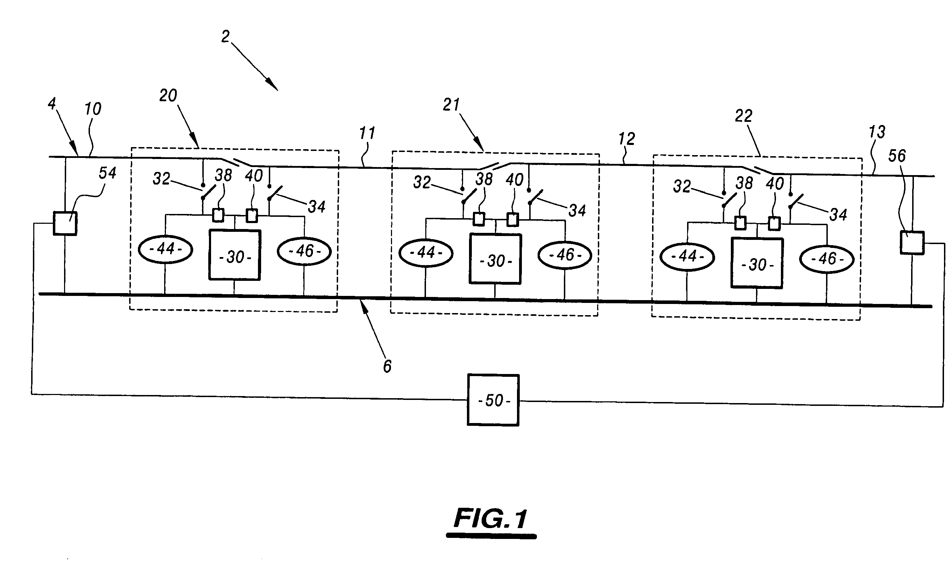

La figure 1 représente un système d'alimentation, désigné par la référence générale 2, d'une caténaire 4.

La caténaire 4 est destinée à alimenter en courant continu une machine ferroviaire telle qu'un train se déplaçant sur des rails 6. A cet effet, la caténaire 4 est apte à coopérer avec un pantographe fixé sur le toit du train.

Par caténaire, on désigne ici aussi bien une caténaire formée d'un ou plusieurs fils de contact suspendus à un ou plusieurs fils porteurs qu'une ligne aérienne de contact formée d'un ou plusieurs fils assurant à la fois les fonctions de contact et de portage. On rappelle que les fils de contact sont destinés à assurer le contact avec le pantographe tandis que les fils porteurs sont aptes à porter et à maintenir en l'air les fils de contact. On désignera également par caténaire un rail d'alimentation en électricité des trains disposé par terre le long de la voie et sur laquelle frotte un ou plusieurs frotteurs solidaires du train. Ce dernier cas particulier de caténaire est également connu sous les termes de « rail de courant ».

La caténaire 4 est divisée en plusieurs portions ou sections raccordées électriquement bout à bout par l'intermédiaire de stations d'alimentation. Ici à titre d'illustration, seules quatre portions successives 10 à 13 de caténaire ont été représentées. Chaque portion de caténaire a une longueur supérieure à 100 mètres et généralement supérieure à 1 kilomètre.

De manière à alimenter chacune de ces portions en courant continu, des stations d'alimentation 20, 21 et 22 sont respectivement raccordées entre les portions 10 et 11, 11 et 12 et 12 et 13.

Ainsi, chaque station est raccordée à une portion amont de caténaire et à une portion aval de caténaire. Sur la figure 1, l'amont se trouve vers la gauche et l'aval se trouve vers la droite.

Chaque station comporte un convertisseur de courant 30 dont une première borne de sortie est raccordée aux portions amont et aval de caténaire et dont une seconde borne de sortie est raccordée au rail 6. Ce convertisseur 30 est également raccordé à une source de tension formée ici par un réseau de distribution électrique apte à lui fournir, par exemple, une tension alternative comprise entre 5000 et 10 000 volts. Ce convertisseur est apte à abaisser la tension fournie par le réseau de distribution puis à la redresser de manière à générer un courant continu en sortie.

Dans chaque station, le convertisseur 30 est raccordé aux portions amont et aval de caténaire par l'intermédiaire respectivement d'un disjoncteur amont 32 et d'un disjoncteur aval 34. Ces disjoncteurs sont, par exemple, des disjoncteurs connus sous l'appellation de "disjoncteur ultra-rapide".

Chaque station comporte également deux détecteurs de défaut de ligne 38 et 40. Ces détecteurs de défaut sont capables de détecter un défaut sur une portion de la caténaire 4. Par exemple, un défaut est détecté si les variations du courant sur une portion de caténaire sont supérieures à un premier seuil prédéterminé ou si l'intensité du courant sur cette portion de caténaire est également supérieure à un second seuil prédéterminé.

Plus précisément, le détecteur 38 est apte à détecter un défaut sur la portion amont de caténaire tandis que le détecteur 40 est apte à détecter un défaut sur la portion avale de caténaire.

Chacun de ces détecteurs est également apte à commander l'ouverture d'un disjoncteur lorsqu'il détecte un défaut. Ici, les détecteurs 38 et 40 sont aptes à commander respectivement les disjoncteurs 32 et 34.

Sur la figure 1, les traits obliques représentés à l'extrémité des portions amont et aval de caténaire indiquent que ces extrémités sont électriquement isolées l'une de l'autre de sorte que celles-ci ne sont électriquement raccordées que lorsque les disjoncteurs 32 et 34 sont fermés, c'est-à-dire conducteurs.

Finalement, chaque station comporte également un générateur 44 et un récepteur 46 de signaux de commande émis et reçus par l'intermédiaire de la caténaire 4.

Ici, à titre d'exemple, le signal de commande émis par le générateur 44 est un courant alternatif à une fréquence propre à identifier la station qui l'a émis sur la caténaire 4. De préférence, les fréquences émises par les générateurs de chacune des stations sont réparties entre 30 Hertz et 3000 Gigahertz.

Ici, les fréquences des courants alternatifs émis par les générateurs des stations 20 à 22 seront respectivement notées fₙ₋₁, fₙ et fₙ₊₁.

Pour des raisons de sécurité, chacun des générateurs 44 est adapté pour émettre en permanence ou au moins à intervalles réguliers le signal de commande et seule l'interruption de la réception de ce signal de commande déclenche l'ouverture des disjoncteurs 32 ou 34 d'une station.

Le générateur 44 de chaque station est raccordé à cet effet, aux rails 6 et à la caténaire 4 par l'intermédiaire des disjoncteurs 32 et 34.

Le récepteur 46 de chaque station est également raccordé aux rails 6 et à la caténaire 4 par l'intermédiaire des disjoncteurs 32 et 34 de manière à ce que les signaux de commande transportés par la caténaire 4 traversent le disjoncteur 32 ou 34 avant d'être reçus par le récepteur 46.

Le récepteur 46 de chaque station est réglé de manière à recevoir uniquement les signaux de commande émis par des stations amont et aval, c'est-à-dire les stations raccordées respectivement à l'extrémité des portions amont et aval de caténaire.

De plus, chaque récepteur 46 est réglé de manière à recevoir un signal d'interruption générale émis par des émetteurs raccordés à chacune des extrémités de la caténaire 4, c'est-à-dire ici, respectivement à l'extrémité gauche de la portion 10 et à l'extrémité droite de la portion 13.

Chaque récepteur 46 est également apte :
- à commander l'ouverture du disjoncteur aval 34 lorsque le signal de commande émis par la station aval n'est plus reçu,
- à commander l'ouverture du disjoncteur amont 32 lorsque le signal de commande émis par la station amont n'est plus reçu, et
- à commander l'ouverture des disjoncteurs amont 32 et aval 34 lorsque le signal d'interruption générale n'est plus reçu.

Pour émettre le signal d'interruption générale un poste de commande 50 commande des émetteurs 54 et 56, respectivement raccordés chacun à une extrémité de la caténaire 4.

Ici, à titre d'exemple, le signal d'interruption générale émis par chaque émetteur 54 et 56 est un courant alternatif à une fréquence spécifique Fg. La fréquence spécifique utilisée par l'émetteur 54 est choisie pour ne pas interférer avec celles des générateurs 44 ni avec celle de l'autre poste de commande 56.

Également pour des raisons de sécurité, chacun des émetteurs 54 et 56 est adapté pour émettre en permanence ou au moins à intervalles réguliers le signal d'interruption générale et seule l'interruption de la réception de ce signal d'interruption générale déclenche l'ouverture de l'ensemble des disjoncteurs 32 ou 34 des stations.

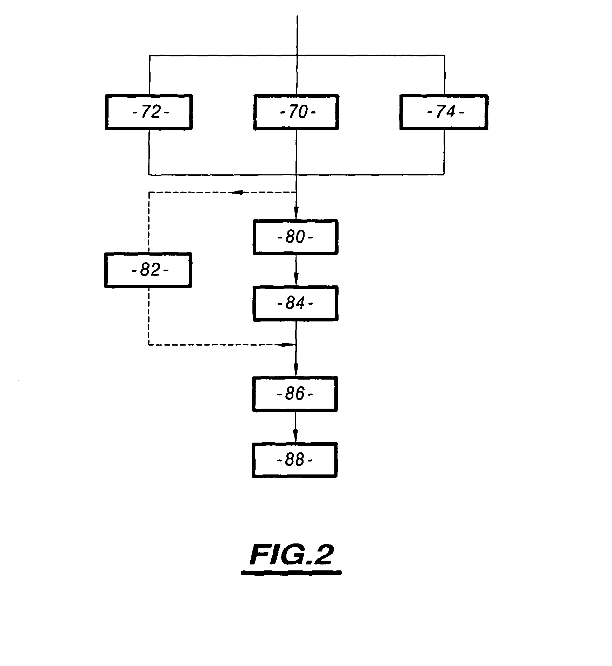

Le fonctionnement du système 2 va maintenant être décrit en regard du procédé de la figure 2.

Lorsque la caténaire 4 ne présente aucun défaut, l'ensemble des disjoncteurs 32 et 34 de chacune des stations sont fermés de sorte que chaque portion de la caténaire 4 est alimentée en courant continu par l'un des convertisseurs 30.

Dans cette situation, chaque station émet en permanence, lors d'une étape 70, son signal de commande à destination des stations amont et aval. En parallèle, chaque émetteur 54, 56 émet également, lors d'une étape 72, en permanence le signal d'interruption générale sur la caténaire 4.

Toujours en parallèle, le récepteur 46 de chaque station reçoit, lors d'une étape 74, en permanence, deux signaux de commande provenant respectivement des stations amont et aval et un signal d'interruption générale provenant des émetteurs 54, 56.

On notera que le signal de commande provenant de la station amont est reçu par l'intermédiaire du disjoncteur 32 tandis que le signal de commande provenant de la station aval est reçu par l'intermédiaire du disjoncteur 34.

On suppose maintenant qu'un défaut apparaît sur la portion 11 de la caténaire 4 tel que, par exemple, une rupture de la caténaire à proximité de la station 21.

La station 21 dispose de deux moyens pour détecter cette rupture.

Tout d'abord, si une extrémité de la caténaire touche le sol, ceci produit un court-circuit qui se traduit par une augmentation très rapide de l'intensité délivrée par le convertisseur 30 de la station 21. Le détecteur 38 détecte cette augmentation rapide de l'intensité et commande, lors d'une étape 80, l'ouverture du disjoncteur 32.

Lorsque le disjoncteur 32 de la station 21 est ouvert, les signaux de commande émis par le générateur 44 de cette même station ne sont plus transmis vers la station 20. Dès lors, lors d'une étape 84, le récepteur 46 de la station 20 qui ne reçoit plus le signal de commande de la station 21 commande automatiquement l'ouverture du disjoncteur 34.

Ainsi, la portion 11 défaillante de la caténaire 4 est électriquement isolée. Par contre, les autres portions de la caténaire 4 continuent à être alimentées en courant par l'intermédiaire des stations 20, 21 et 22. Il est donc encore possible de faire circuler des trains sur ces portions alimentées.

La rupture de la portion 11 de la caténaire 4 peut également être détectée par le moyen suivant. Lorsque la portion 11 est rompue, les signaux de commande émis par la station 20 à destination de la station 21 et les signaux de commande émis par la station 21 à destination de la station 20 ne peuvent plus être transmis par l'intermédiaire de cette portion de caténaire. Dès lors, les récepteurs 46 de chacune de ces stations détectent une interruption de la réception des signaux de commande transitant par l'intermédiaire de la portion 11 et commande automatiquement et quasiment simultanément, lors d'une étape 82, l'ouverture des disjoncteurs 34 et 32 de manière à isoler électriquement la portion 11 de caténaire.

Lorsque ce second moyen de détection d'une rupture est mis en oeuvre, celui-ci permet de détecter une rupture de caténaire avant même qu'un court circuit se produise.

La détection de cette rupture est d'autant plus rapide que les signaux de commande émis par les stations 20 et 21 sont fréquents et de préférence les signaux de commande sont donc émis en permanence.

Le fait d'émettre à chaque extrémité de la caténaire 4 les signaux d'interruption générale permet de maintenir en fonctionnement les portions de caténaires en amont et en aval de la portion défaillante.

Par contre, en cas de défaillances simultanées de deux portions distinctes de la caténaire 4, les portions de caténaire situées entre les deux portions défaillantes seront automatiquement isolées puisque les stations raccordées à ces portions ne reçoivent plus le signal d'interruption générale émis par l'émetteur 54 ou 56.

Pour, par exemple, des raisons de maintenance ou d'exploitation il est nécessaire de temps en temps d'isoler l'ensemble de la caténaire 4. A cet effet, le poste 50 commande les émetteurs 54 et 56 pour que ces émetteurs arrêtent d'émettre le signal d'interruption générale ce qui est détecté lors d'une étape 86, par l'ensemble des récepteurs 46 des stations d'alimentation. En réponse, chaque récepteur 46 commande l'ouverture simultanée, lors d'une étape 88, des disjoncteurs 32 et 34. Ainsi, l'ensemble des portions de la caténaire 4 se retrouve isolé électriquement.

Le système 2 a été décrit dans le cas particulier où chaque générateur 44 émet en continu un courant à une fréquence propre vers les stations amont et aval. En variante, les générateurs 44 sont adaptés pour émettre des trames d'informations comportant un identifiant de la station qui les a émis, et les récepteurs sont adaptés pour recevoir ces trames d'informations et identifier la station émettrice de ces trames. Ainsi, dans cette variante, il n'est plus nécessaire que chaque générateur émette sur une fréquence qui lui est propre. Par exemple, seule une seule fréquence sera utilisée. Toutefois, cette variante, nécessite l'utilisation d'un protocole de communication entre les générateurs 44 et les récepteurs 46.

Les stations d'alimentation ont été décrites dans le cas particulier où elles ne comportent qu'un seul récepteur réglé de manière à recevoir uniquement les signaux de commande des stations amont et aval et le signal d'interruption générale. En variante, chaque station comporte trois récepteurs, chacun de ces récepteurs étant réglé sur l'un des signaux que doit recevoir cette station.

Le système 2 a été décrit dans le cas particulier où celui-ci ne comporte qu'un seul poste de commande 50 pour commander les émetteurs 54 et 56. En variante, le système 2 comporte un second poste de commande également raccordé aux émetteurs 54 et 56 pour les commander. Ceci permet de commander les mêmes émetteurs 54 et 56 à partir d'endroits différents.

## Revendications

1. Système d'alimentation d'une caténaire (4), comportant :
- plusieurs stations d'alimentation (20 à 22) de la caténaire (4), chaque station d'alimentation étant raccordée entre deux portions amont et aval de la caténaire (4), et chaque station d'alimentation étant apte à interrompre l'alimentation d'au moins l'une des portions amont ou aval de caténaire à laquelle elle est raccordée en réponse à des signaux de commande,
**caractérisé en ce que** le système comporte au moins un générateur (44, 54, 56) apte à émettre les signaux de commande par l'intermédiaire de la caténaire (4), et **en ce que** chaque station comporte un récepteur (46) apte à recevoir les signaux de commande émis par l'intermédiaire de la caténaire et à commander l'interruption de l'alimentation d'au moins une des portions de caténaire en réponse à au moins l'un de ces signaux de commande.

2. Système selon la revendication 1, **caractérisé en ce qu'**il comporte au moins un émetteur (54, 56) commandé par un poste de commande (50), indépendant des stations d'alimentation, raccordé à la caténaire (4), le ou chaque émetteur étant apte à émettre en permanence ou à intervalles réguliers un premier signal de commande par l'intermédiaire de la caténaire (4), et **en ce que** chaque récepteur est apte à commander le maintien de l'alimentation des portions amont ou aval de caténaire tant que le premier signal de commande est reçu en permanence ou à intervalles réguliers, et à commander l'interruption de l'alimentation des portions amont et aval de caténaire dès que le premier signal de commande n'est plus reçu.

3. Système selon la revendication 2, **caractérisé en ce qu'**au moins un émetteur (54, 56) est raccordé à chaque extrémité de la caténaire (4) de manière à émettre le premier signal de commande à partir de chacune de ces extrémités.

4. Système selon l'une quelconque des revendications 2 à 3, **caractérisé en ce que** le ou chaque émetteur (54, 56) est apte à émettre un courant alternatif à une fréquence donnée en tant que premier signal de commande.

5. Système selon l'une quelconque des revendications précédentes, **caractérisé en ce que** chaque station d'alimentation comporte un générateur (46) pour émettre un second signal de commande vers au moins une autre station d'alimentation par l'intermédiaire de la caténaire (4).

6. Système selon la revendication 5, **caractérisé :**
- **en ce que** le générateur de chaque station est apte à émettre en permanence ou à intervalles réguliers le second signal de commande,
- **en ce que** chaque station d'alimentation (20 à 22) est apte à recevoir le second signal de commande émis par les stations amont et aval d'alimentation raccordées aux extrémités des portions respectivement amont et aval de caténaire entre lesquelles elle est raccordée, et
- en ce chaque station est apte à interrompre automatiquement l'alimentation de la portion amont de caténaire si la réception du second signal de commande émis par la station amont est interrompue, et à interrompre automatiquement l'alimentation de la portion aval de caténaire si la réception du second signal de commande émis par la station aval est interrompue.

7. Système selon la revendication 5 ou 6, **caractérisé en ce que** le générateur de chaque station d'alimentation est apte à émettre en tant que second signal de commande un courant alternatif à une fréquence différente de celle utilisée par les générateurs des autres stations d'alimentation raccordées à la même caténaire.

8. Système selon la revendication 5 ou 6, **caractérisé en ce que** le générateur de chaque station est apte à émettre un second signal de commande comportant au moins un identifiant de la position de cette station par rapport aux stations amont et aval, et **en ce que** le récepteur de chaque station est apte à discriminer le second signal de commande émis par la station amont de celui émis par la station aval à l'aide dudit au moins un identifiant contenu dans ce second signal de commande reçu.

9. Station d'alimentation d'une caténaire adaptée pour être mise en oeuvre dans un système d'alimentation conforme à l'une quelconque des revendications précédentes, **caractérisée en ce qu'**elle comporte un récepteur (46) apte à recevoir les signaux de commande émis par l'intermédiaire de la caténaire (4) et à commander l'interruption de l'alimentation d'au moins une des portions de caténaire en réponse à au moins l'un de ces signaux de commande.

10. Procédé d'interruption de l'alimentation d'une portion de caténaire défaillante, **caractérisé en ce que** le procédé consiste en outre à :
- émettre (en 70, 72) en permanence ou à intervalles réguliers par l'intermédiaire de la caténaire, un signal de commande vers des stations d'alimentation de la caténaire,
- recevoir (en 74) le signal de commande dans chaque station d'alimentation, et
- commander (en 82, 84) l'interruption de l'alimentation d'au moins une portion de la caténaire lorsque le signal de commande n'est plus reçu en permanence ou à intervalles réguliers dans l'une des stations d'alimentation.

11. Procédé selon la revendication 10, **caractérisé :**
- **en ce que** chaque station d'alimentation émet (en 70) en permanence ou à intervalles réguliers sur la caténaire son propre signal de commande, et
- **en ce que** chaque station d'alimentation reçoit le signal de commande émis par les stations d'alimentation raccordées en amont et en aval sur la caténaire, et interrompt (en 82, 84) automatiquement l'alimentation de la portion de caténaire située entre elle et la station d'alimentation en amont lorsque la réception du signal de commande émis par la station d'alimentation en amont est interrompue, et interrompt (en 82, 84) automatiquement l'alimentation de la portion de caténaire située entre elle et la station d'alimentation en aval lorsque la réception du signal de commande émis par cette station d'alimentation en aval est interrompue.

## Claims

1. Power supply system for a catenary (4), including:
- several stations (20 to 22) feeding the catenary (4), each feeder station being connected between two upstream and downstream sections of the catenary (4), and each feeder station being designed to interrupt the power supply to at least one of the upstream or downstream sections of the catenary to which it is connected in response to control signals,
**characterised in that** the system includes at least one generator (44, 54, 56) designed to transmit control signals via the catenary (4), and **in that** each station includes a receiver (46) designed to receive the control signals transmitted via the catenary and to control the interruption of power to at least one of the catenary sections in response to at least one of these control signals.

2. System according to claim 1, **characterised in that** it includes at least one transmitter (54, 56) controlled by a control station (50) independent of the feeder stations, connected to the catenary (4), the transmitter or each of the transmitters being designed to transmit a first control signal via the catenary (4) either continuously or at regular intervals, and **in that** each receiver is designed to maintain the power supply to the upstream or downstream catenary section while the first control signal is being received continuously or at regular intervals, and to interrupt the power supply to the upstream and downstream catenary sections when the first control signal is no longer being received.

3. System according to claim 2, **characterised in that** at least one transmitter (54, 56) is connected to each end of the catenary (4) so as to transmit the first control signal from each of these ends.

4. System according to any one of claims 2 to 3, **characterised in that** the transmitter or each of the transmitters (54, 56) is designed to transmit an alternating current at a given frequency as the first control signal.

5. System according to any one of the foregoing claims, **characterised in that** each feeder station includes a generator (46) to transmit a second control signal to at least one other feeder station via the catenary (4).

6. System according to claim 5, **characterised:**
- **in that** the generator at each station is designed to transmit the second control signal continuously or at regular intervals,
- **in that** each feeder station (20 to 22) is designed to receive the second control signal transmitted by the upstream and downstream feeder stations connected to the ends of the upstream and downstream catenary sections respectively between which it is connected, and
- **in that** each station is designed to automatically interrupt the power supply to the upstream catenary section if reception of the second control signal transmitted by the upstream station is interrupted, and to automatically interrupt the power supply to the downstream catenary section if reception of the second control signal transmitted by the downstream station is interrupted.

7. System according to claim 5 or 6, **characterised in that** the generator at each feeder station is designed to transmit as the second control signal an alternating current at a frequency different from that used by the generators at the other feeder stations connected to the same catenary.

8. System according to claim 5 or 6, **characterised in that** the generator at each station is designed to transmit a second control signal including at least one identifier of the position of this station relative to the upstream and downstream stations, and **in that** the receiver at each station is designed to discriminate the second control signal transmitted by the upstream station from that transmitted by the downstream station by means of said at least one identifier contained in this received second control signal.

9. Catenary feeder station capable of being deployed in a power supply system according to any one of the foregoing claims, **characterised in that** it includes a receiver (46) designed to receive the control signals transmitted via the catenary (4) and to interrupt the power supply to at least one of the catenary sections in response to at least one of these control signals.

10. Method of interrupting the power supply to a faulty catenary section, **characterised in that** the method additionally consists in:
- transmitting (at 70, 72) a control signal to catenary feeder stations continuously or at regular intervals via the catenary,
- receiving (at 74) the control signal at each feeder station, and
- interrupting (at 82, 84) the power supply to at least one section of the catenary when the control signal is no longer being received continuously or at regular intervals at one of the feeder stations.

11. Method according to claim 10, **characterised:**
- **in that** each feeder station transmits (at 70) its own control signal continuously or at regular intervals via the catenary, and
- **in that** each feeder station receives the control signal transmitted by the feeder stations connected upstream and downstream on the catenary, and automatically interrupts (at 82, 84) the power supply to the catenary section situated between it and the upstream feeder station when reception of the control signal transmitted by the upstream feeder station is interrupted, and automatically interrupts (at 82, 84) the power supply to the catenary section situated between it and the downstream feeder station when reception of the control signal transmitted by this downstream feeder station is interrupted.

## Patentansprüche

1. Versorgungssystem für eine Oberleitung (4), mit:
- mehreren Versorgungsstationen (20 bis 22) für die Oberleitung (4), wobei jede Versorgungsstation zwischen zwei Abschnitten der Oberleitung (4) angeschlossen ist, die in Fahrtrichtung vor und hinter ihr liegen, und wobei jede Versorgungsstation als Antwort auf Steuersignale zur Unterbrechung der Versorgung zu mindestens einem der Abschnitte der Oberleitung in Fahrtrichtung vor und hinter ihr geeignet ist, an welchem sie angeschlossen ist,
**dadurch gekennzeichnet, dass** das System zumindest einen Generator (44, 54, 56) aufweist, der zur Aussendung der Steuersignale mittels der Oberleitung (4) geeignet ist, und dass jede Station einen Empfänger (46) aufweist, der zum Empfangen der mittels der Oberleitung ausgesendeten Steuersignale und zum Steuern der Unterbrechung der Versorgung von zumindest einem der Abschnitte der Oberleitung als Antwort auf den zumindest eines dieser Steuersignale geeignet ist.

2. Versorgungssystem nach Anspruch 1, **dadurch gekennzeichnet, dass** es zumindest einen Sender (54, 56) aufweist, welcher von einer Leitstation (50) unabhängig von den Versorgungsstationen gesteuert ist, welcher an die Oberleitung (4) angeschlossen ist, wobei der oder jeder Sender zur ständigen Aussendung oder zur Aussendung in regelmäßigen Abständen eines ersten Steuersignals mittels der Oberleitung (4) geeignet ist, und dass jeder Empfänger zur Aufrechterhaltung der Versorgung der Abschnitte der Oberleitung in Fahrtrichtung vor und hinter ihr geeignet ist, solange das erste Steuersignal ständig oder in regelmäßigen Abständen empfangen wird, und zur Steuerung der Unterbrechung der Versorgung der Abschnitte der Oberleitung in Fahrtrichtung vor und hinter ihr geeignet ist, sobald das erste Steuersignal nicht mehr empfangen wird.

3. Versorgungssystem nach Anspruch 2, **dadurch gekennzeichnet, dass** an jedem Ende der Oberleitung (4) zumindest ein Sender (54, 56) auf eine solche Weise angeschlossen ist, um das erste Steuersignal von jedem dieser Enden ausgehend auszusenden.

4. Versorgungssystem nach einem der Ansprüche 2 bis 3, **dadurch gekennzeichnet**, das der oder jeder Sender (54, 56) zur Aussendung eines Wechselstroms mit einer gegebenen Frequenz in der Eigenschaft als erstes Steuersignal geeignet ist.

5. Versorgungssystem nach einem der vorhergehenden Ansprüche, **dadurch gekennzeichnet, dass** jede Versorgungsstation einen Generator (46) zur Aussendung eines zweiten Steuersignals mittels der Oberleitung (4) zu zumindest einer anderen Versorgungsstation aufweist.

6. Versorgungssystem nach Anspruch 5, **dadurch gekennzeichnet:**
- **dass** der Generator einer jeden Station zur ständigen Aussendung oder zur Aussendung in regelmäßigen Abständen des zweiten Steuersignals geeignet ist,
- **dass** jede Versorgungsstation (20 bis 22) zum Empfang des zweiten Steuersignals geeignet ist, welches von den vor und hinter ihr liegenden Versorgungsstationen ausgesendet wird, die an den Enden der jeweiligen Abschnitte der Oberleitung in Fahrtrichtung vor und hinter ihr angeschlossen sind, zwischen denen dieser angeschlossen ist, und
- **dass** jede Station zur automatischen Unterbrechung des Abschnitts der Oberleitung in Fahrtrichtung vor ihr geeignet ist, wenn der Empfang des von der Station ausgesendeten zweiten Steuersignals unterbrochen ist, welche in Fahrtrichtung vor ihr liegt, und zur automatischen Unterbrechung des Abschnitts der Oberleitung in Fahrtrichtung hinter ihr geeignet ist, wenn der Empfang des zweiten Signals unterbrochen ist, welches von der Station ausgesendet wird, die in Fahrtrichtung hinter ihr liegt.

7. Versorgungssystem nach Anspruch 5 oder 6, **dadurch gekennzeichnet dass** der Generator jeder Versorgungsstation zur Aussendung in der Eigenschaft als zweites Steuersignal einen Wechselstrom mit einer Frequenz geeignet ist, die unterschiedlich zu der von den Generatoren der anderen Versorgungsstationen verwendeten ist, welche an dieselbe Oberleitung angeschlossen sind.

8. Versorgungssystem nach Anspruch 5 oder 6, **dadurch gekennzeichnet, dass** der Generator jeder Station zur Aussendung eines zweiten Steuersignals geeignet ist, welches zumindest ein Kennzeichen der Position dieser Station in Bezug auf die in Fahrtrichtung vor und hinter ihr liegenden Stationen aufweist, und dass der Empfänger jeder Station mit Hilfe des zumindest einen Kennzeichens, das in diesem zweiten empfangenen Steuersignal enthalten ist, zur Unterscheidung des zweiten Steuersignals, das von der in Fahrtrichtung vor ihr liegenden Station ausgesendet wird, von demjenigen geeignet ist, welches von der in Fahrtrichtung hinter ihr liegenden Station ausgesendet wird.

9. Versorgungsstation für eine Oberleitung, welche zum Einsatz in einem Versorgungssystem gemäß einem der vorhergehenden Ansprüche angepasst ist, **dadurch gekennzeichnet, dass** sie einen Empfänger (46) aufweist, der zum Empfang der mittels der Oberleitung (4) gesendeten Steuersignale und zur Steuerung der Unterbrechung der Versorgung zu zumindest einem der Abschnitte der Oberleitung als Auswirkung auf zumindest das eine dieser Steuersignale geeignet ist.

10. Verfahren zum Unterbrechen der Versorgung eines Abschnitts einer ausgefallenen Oberleitung, **dadurch gekennzeichnet, dass** das Verfahren überdies die folgenden Verfahrensschritte aufweist:
- Ständiges oder in regelmäßigen Intervallen mittels der Oberleitung erfolgendes Aussenden (in 70, 72) eines Steuersignals zu den Versorgungsstationen der Oberleitung,
- Empfangen (in 74) des Steuersignals in jeder Versorgungsstation, und
- Steuern (in 82, 84) der Unterbrechung der Versorgung von zumindest einem Abschnitt der Oberleitung, wenn das Steuersignal nicht ständig oder nicht in regelmäßigen Abständen in einer der Versorgüngsstationen empfangen wird.

11. Verfahren nach Anspruch 10, **dadurch gekennzeichnet:**
- **dass** jede Versorgungsstation ständig oder in regelmäßigen Abständen auf der Oberleitung ihr eigenes Steuersignal aussendet (in 70), und
- **dass** jede Versorgungsstation das von den Versorgungsstationen auf der Oberleitung ausgesendete Steuersignal empfängt, welche in Fahrtrichtung vor und hinter ihr angeschlossen sind, und automatisch die Versorgung des Abschnitts der Oberleitung unterbricht (in 82, 84), der zwischen ihr und der Versorgungsstation in Fahrtrichtung vor ihr angeordnet ist, wenn der Empfang des von der in Fahrtrichtung vor ihr liegenden Versorgungsstation ausgesendeten Steuersignals unterbrochen ist, und automatisch die Versorgung des Abschnitts der Oberleitung unterbricht (in 82, 84), der zwischen ihr und der Versorgungsstation in Fahrtrichtung hinter ihr angeordnet ist, wenn der Empfang des von dieser in Fahrtrichtung hinter ihr liegenden Versorgungsstation ausgesendeten Steuersignals unterbrochen ist.
